# EUROPÄISCHE PATENTSCHRIFT

(11) **EP 1 160 227 B1**
(45) Veröffentlichungstag und Bekanntmachung des Hinweises auf die Patenterteilung: **02.04.2008**
(21) Anmeldenummer: 01113277.6
(22) Anmeldetag: 31.05.2001
(51) Int. Cl.: C05F 17/02, C05F 9/04

(54) **Seitenversetzer zur seitlichen Versetzung von Kompostmaterial**
Shifting machine for laterally shifting of compost
Appareil pour déplacer latéralement du compost

(30) Priorität: 02.06.2000 DE 10027540
(43) Veröffentlichungstag der Anmeldung: 05.12.2001
(73) Patentinhaber: Friedrich Backhus Jeddeloh II, 26188 Edewecht (DE)
(72) Erfinder: Gerdes, Stefan, 26188 Edewecht (DE)
(74) Vertreter: Bockhorni & Kollegen

(56) Entgegenhaltungen:
- EP-A- 0 655 428
- DE-A- 19 647 340
- US-A- 5 127 589

## Beschreibung

Die Erfindung betrifft einen Seitenversetzer zur seitlichen Versetzung von Kompostmaterial zu einer neuen Anhäufung (Miete), welches von einem Arbeitsrotor einer verfahrbaren Vorrichtung zur Durcharbeitung von Kompostmaterial aus einer ursprünglichen Kompostanhäufung (Kompostmiete) auf ein in Versetzungsrichtung förderndes Förderorgan des Seitenversetzers gelangt.

Verfahrbare Vorrichtungen, insbesondere selbstfährende Vorrichtungen, zum Durcharbeiten von wallartig angehäuften Kompostmieten sind zum Teil, wie in DE 196 47 340 A1, EP 0 655 428 A1 und US 5,127,589 beschrieben, mit gattungsgemäßen Seitenversetzern ausgerüstet. Eine Vorrichtung zum Durcharbeiten des Kompostmaterials verfährt entlang einer wallartigen Kompostmiete, wobei sich ein Arbeitsrotor quer zu der wallartigen Anhäufung erstreckt, sich durch das Kompostmaterial hindurcharbeitet und dieses Material umsetzt. Dieser Umsetzungsvorgang würde mit dem Arbeitsrotor allein entlang der wallartigen Anhäufung erfolgen, so daß das Kompostmaterial nach dem Durcharbeitungsprozeß im wesentlichen auf derselben Linie wieder zum Liegen käme. Durch einen dem Arbeitsrotor nachfolgenden Seitenversetzer wird stattdessen das jeweils vom Arbeitsrotor durchgearbeitete und aufgeworfene Kompostmaterial auf ein Förderorgan des Seitenversetzers übergeben, das quer zur Längserstreckung der wallartigen Kompostmiete orientiert ist und somit das übernommene Kompostmaterial seitlich versetzt zur ursprünglichen Kompostmiete wieder ablegt, so daß nach der Durcharbeitung des Kompostmaterials eine neue wallartige Kompostanhäufung parallel und seitenversetzt zur ursprünglichen Kompostmiete entstanden ist. Durch den seitlichen Versatz wird letztendlich das Kompostmaterial noch gründlicher durchgearbeitet und belüftet. Dabei ist der Seitenversetzer in der Regel Bestandteil der Durcharbeitungsvorrichtung selbst.

Bei bekannten Durcharbeitungsvorrichtungen mit Seitenversetzer (DE 43 40 612 C1) ist das Förderorgan des Seitenversetzers ein zur Verfahrrichtung der Vorrichtung im wesentlichen querverlaufendes Förderband. Auch die Übergabeeinrichtung zur Übergabe des vom Arbeitsrotor aufgeworfenen und durchgearbeiteten Materials auf das Förderband ist ein zweites Förderband, das sich rechtwinklig zu dem Förderband des Seitenversetzers in Fahrtrichtung der Durcharbeitungsvorrichtung bis in den Arbeitsbereich des Arbeitsrotors erstreckt. Dieses Übergabe-Förderband hat aber aus bautechnischen Gründen eine relativ begrenzte Arbeitsbreite, die sehr viel geringer ist als die Länge des Förderbandes des Seitenversetzers, so daß die Materialübergabe nur in einem eingeschränkten Bereich des Förderbandes des Seitenversetzers erfolgt und damit der Seitenversetzer nicht effizient ausgenutzt wird. Vor dem in Fahrtrichtung sich erstreckenden Förderband ist ein Kratzschild nahe des Arbeitsrotors angeordnet, mit dem in üblicher Weise auf dem Boden verbleibender Kompost aufgenommen und dem Arbeitsrotor zugeführt wird. An das zumeist im wesentlichen horizontal verlaufende Förderband des Seitenversetzers schließt sich in der Regel ein zweites Förderband des Seitenversetzers in Förderrichtung an, welches das Material aufwärts bis zu einem freien Abgabeende fördert und somit das erste Förderband des Seitenversetzers für einen ausgedehnteren seitlichen Versatz verlängert.

Einen Engpaß in dem Materialfluß stellt somit das Übergabe-Förderband vom Arbeitsrotor zum Seitenversetzer dar.

Der Erfindung liegt die Aufgabe zugrunde, einen Seitenversetzer aufzuzeigen, mit dem effektiver, insbesondere unter besserer Raumausnutzung, gearbeitet werden kann.

Diese Aufgabe wird gemäß einer ersten erfinderischen Lösung der gestellten Aufgabe dadurch gelöst, daß ein Nachschiebeschild vorgesehen ist, welcher sich im wesentlichen parallel zum Förderorgan und zum Arbeitsrotor und zwischen diesen erstreckt, und daß der Nachschiebeschild am Arbeitbereich des Arbeitsrotors positioniert ist.

Nach Maßgabe der Erfindung wird der Zwischenraum zwischen Arbeitsrotor und seitlich wegführendem Förderorgan maßgeblich durch ein Nachschiebeschild überbrückt, womit das im Stand der Technik erforderliche Übergabe-Förderband wegfällt. Daraus resultiert eine sehr kompakte Bauweise bei der Arbeitsvorrichtung, wobei problemlos der Kompost über die gesamte Arbeitsbreite des Arbeitsrotors auf das seitlich wegführende Förderorgan aufgeworfen werden kann. In Folge des vorzugsweise unter einem Winkel von 50° bis 80° und zwar besonders bevorzugt etwa 70° spitzwinklig schräggestellten Nachschiebeschilds kann der Arbeitsrotor sehr nahe an das seitlich wegführende Förderorgan herangerückt werden. Dadurch ergibt sich eine unmittelbare Materialübergabe vom Arbeitsrotor auf das Förderorgan des Seitenversetzers, wobei eine einwandfreie Umarbeitung des Kompostes unter Beihilfe des Nachschiebeschilds gewährleistet ist, welches sich wesentlich über die gesamte Arbeitsbreite des Arbeitsrotors erstreckt. Deswegen erfolgt über die gesamte Arbeitsbreite ein Übergabematerialstrom, ohne dass es bei der Übergabe zu einem Materialengpass käme. In diesem Zusammenhang ist es zweckmäßig, dass der Nachschiebeschild am Seitenversetzer angeordnet ist und zwar vorzugsweise unterhalb des seitlich wegfördernden Förderorgans. Die Aufhängung erfolgt zweckmäßiger Weise nach oben hin schwenkbar, so dass Hindernissen, wie etwa Dehnungsfugen auf der Betonfahrstrecke und dgl. ausgewichen werden kann. Eine Schwenkbewegung ist nach unten durch einen Festanschlag zweckmäßiger Weise begrenzt, wobei vorzugsweise ein Abstand von etwa 20 mm zur Fahrstrecke zwischen dem unteren Ende des Schildes und der Fahrstrecke eingehalten wird. Hierbei ist es zweckmäßig, wenn am unteren Rand des Schildes eine Verschleißleiste angeordnet ist, die insbesondere aus Hartgummi hergestellt ist.

Dabei sorgt außerdem der Nachschiebeschild noch dafür, daß der Arbeitsrotor das Kompostmaterial so weitgehend wie möglich bis zum Erdboden, auf dem das Kompostmaterial lagert, erfaßt, weil der dem Arbeitsrotor unmittelbar nachfolgende Nachschiebeschild eventuell auf dem Erdboden liegengebliebenes Material erfaßt, anhäufend aufschiebt und auf diese Weise im Arbeitsbereich des Arbeitsrotors für eine erneute Erfassung durch den Arbeitsrotor hält. Es wird dadurch also eine quasi restlose Räumung des Bereiches der ursprünglichen und seitlich zu versetzenden Kompostmiete bewirkt.

Um Beeinträchtigungen durch Bodenunebenheiten zu vermeiden, könnte der Nachschiebeschild, mit einer Sensoren- oder Tasteinrichtung, beweglich und/oder federnd angeordnet sein.

Für eine zielgerichtete Materialübergabe und Führung des Materials im Arbeitsbereich des Arbeitsrotors orientiert sich der Nachschiebeschild nach oben vorzugsweise etwa tangential zum Wirkungskreis des Arbeitsrotors.

Eine nächste Weiterbildung der Erfindung zeichnet sich dadurch aus, daß zwischen dem Nachschiebeschild und dem Förderorgan ein sich vorzugsweise etwa entlang der Gesamtlänge des Nachschiebeschildes erstreckender Übergabeorgans für das Kompostmaterial vorgesehen ist, der ein eine nur labile Lage für sich eventuell auflagerndes Kompostmaterial bedingendes Übergabeorgan umfaßt. Dieses Übergabeorgan in Art einer Walze oder dgl. schließt oberhalb des Schildes an diesen an. Bevorzugt erstreckt sich das Schild in Richtung dieses Übergabeorgans.

Diese weiterführende erfinderische Lösung basiert auf der Überlegung, daß sich eventuell Kompostmaterial, welches durchaus nicht immer trocken und rieselfähig ist, sondern verklumpen kann, auf einem verbleibenden Zwischenraum zwischen dem Nachschiebeschild und dem Förderorgan des Seitenversetzers anhäufen und ablagern könnte, so daß durch das Kompostmaterial selbst der Materialstrom der Übergabe vom Arbeitsorgan zum Förderorgan gehindert werden könnte. Deshalb ist erfindungsgemäß in diesem Bereich ein Übergabeorgan vorgesehen, welches sich ebenfalls über die gesamte Arbeitsbreite erstrecken kann und dafür sorgt, daß sich dort eventuell anlagerndes Material jeweils nur in eine labile Gleichgewichtslage kommt, so daß es früher oder später selbsttätig zu einer Selbstreinigung von Kompostmaterial kommt, weil dieses aus der labilen Gleichgewichtslage gerät und wieder in den Arbeitsbereich des Arbeitsorganes zurückfällt oder endgültig in den Bereich des Förderorgans fällt. Es könnte dabei beispielsweise an eine Art Kippmechanismus gedacht. Es könnte auch einfach daran gedacht werden, einen eventuell verbleibenden Zwischenraum zwischen dem Förderorgan und dem Nachschiebeschild besonders spitzwinklig nach oben zu schließen, um einen scharfen Grat zu erhalten, über den das Kompostmaterial entweder fällt oder nicht fällt, ohne daß eine Ablagerung in größerem Umfange stattfinden könnte.

Eine bevorzugte Ausführungsform der Erfindung sieht jedoch vor, daß das Übergabeorgan drehbeweglich gelagert, insbesondere als drehbar gelagerte Walze ausgebildet ist. Diese Walze kann auf einer Achse frei drehbar sein, ohne daß eine Antriebsmöglichkeit dieser Walze vorgesehen sein müßte, was jedoch nicht ausgeschlossen ist. Allein durch die freie Drehbarkeit würde eventuell auf der Walze anbackendes Material früher oder später den Schwerpunkt des Walzen-Material-Gebildes so verändern, daß es zu einer Drehbewegung der Walze kommt, wodurch das Material aufgrund seiner Schwerkraft zu der einen oder zu der anderen Seite abgleitet. In aller Regel wird eventuell sich auf der Walze absetzendes Material zum Förderorgan abgeschoben werden, und zwar durch Material, das vom Arbeitsorgan nachfolgt, wobei in diesem Falle die frei drehbare Walze im wesentlichen aufgrund ihrer geringen Rollreibung den entsprechenden Schiebewiderstand verringert.

Eine nächste Weiterbildung der Erfindung sieht vor, daß zur Seite des Nachschiebeschildes und/oder zur Seite des Förderorgans neben dem Übergabeorgan eine Führungsfläche als Führungsflanke bereitgestellt ist, die im Umfeld der Walze eine unliebsame Ablagerung von Material desweiteren verhindert und eventuell immer noch vorhandene Spalte zwischen dem Nachschiebeschild und dem Übergabeorgan oder dem Übergabeorgan und dem Förderorgan schließt. Diese Führungsflächen können durch Leisten gebildet sein, deren Führungsflächen tangential zur Übergabewalze gerichtet sind und mit diesen eine auf dem Kopf stehende V-Form bilden.

Vorteilhaft ist ferner, daß der Seitenversetzer von der verfahrbaren Vorrichtung zur Durcharbeitung des Kompostmaterials abkoppelbar ist.

Üblicherweise sind gerade die relativ größeren Durcharbeitungsvorrichtungen mit einer relativ vgrößeren Arbeitsbreite und Arbeitslänge, zum Beispiel mit einer Arbeitbreite von 7 bis 8 m, mit einem gattungsgemäßen Seitenversetzer ausgerüstet, so daß mit diesem Seitenversetzer die Gesamtvorrichtung einen noch größeren Raumbedarf hat. Dies ist bei dem Verfahren der Vorrichtung entlang einer Kompostmiete grundsätzlich nicht unbedingt störend. Kompostmieten sind aber häufig in Hallen abgelagert, so daß sich der Seitenversetzer bei einer Umgekehrung der Fahrrichtung, insbesondere einem Wenden der Vorrichtung nachteilig auswirken kann, weil eventuell der Abstand zwischen dem Ende der Kompostmiete und der Hallenwand zu gering ist, als daß auch der Endbereich der Kompostmiete sauber erfaßt werden könnte.

Durch die erfindungsgemäße Lösung kann insbesondere also auch der Raum in einer solchen Halle durch den Seitenversetzer bzw. trotz des Seitenversetzers besser ausgenutzt werden. Der Seitenversetzer kann von der Vorrichtung abgekoppelt werden und wieder angekoppelt werden. Dies könnte bei jedem Wenden der Vorrichtung geschehen, ist aber insbesondere bei dem erstmaligen Beginn der Arbeit einer solchen Vorrichtung in einer solchen Halle vorteilhaft.

Vorzugsweise ist der Seitenversetzer selbst fahrbar, und zwar quer zur Verfahrrichtung der Durcharbeitungsvorrichtung. Hierzu weist der Seitenversetzer vorzugsweise ein Fahrwerk und eine Deichsel auf, so daß er nach seiner Abkopplung beispielsweise mittels eines Ackerschleppers oder dergleichen bewegt werden kann. Dabei ist letztendlich auch ein Transport über die Straße möglich, was sonst bei größeren Kompostmietenumsetzern aufgrund von Straßenverkehrszulassungsordnungen häufig ein Problem darstellt. Der Seitenversetzer, der abgekoppelt ist, weist zwar eine Länge auf, die der relativ großen Arbeitsbreite der Durcharbeitungsvorrichtung entspricht, jedoch kann seine die Deichsel tragende Stirnseite relativ schmal sein, und zwar die Breite des entsprechenden Förderorgans aufweisen. Damit wird beim Verfahren über die Straße ohne weiteres die zulässige Breite eingehalten. Die Durcharbeitungsvorrichtung ohne Seitenversetzer kann dann, wie es normalerweise üblich ist, unter möglichst vollständiger eigener Ausnutzung des zulässigen Raumes auf einem Tieflader oder dergleichen verfahren werden.

Vorzugsweise weist der Seitenversetzer an der die Deichsel tragenden Seite ein längenveränderbares Standbein, zum Beispiel ein mit Hilfe einer Kurbel teleskopierbares Standbein oder Gestell auf, während er an der gegenüberliegenden (Stirn-)Seite beispielsweise eine Achse mit zwei Rädern aufweisen kann, so daß durch ein Hoch- oder Herunterfahren des Standbeines der Seitenversetzer um die Fahrachse geschwenkt werden kann und bei Einhängen der Deichsel in eine Schleppeinrichtung das Standbein so verkürzt werden kann, daß es vom Erdboden freikommt und der Seitenversetzer auf dem einachsigen Fahrwerk verfahren werden kann.

Ein Ausführungsbeispiel, aus dem sich weitere erfinderische Merkmal ergeben, ist in der Zeichnung dargestellt. Es zeigen:
- Fig. 1: einen Querschnitt durch einen erfindungsgemäßen Seitenversetzer mit vorgelagertem Arbeitsrotor und
- Fig. 2.: eine Vorderansicht des Seitenversetzers gemäß Fig. 1.

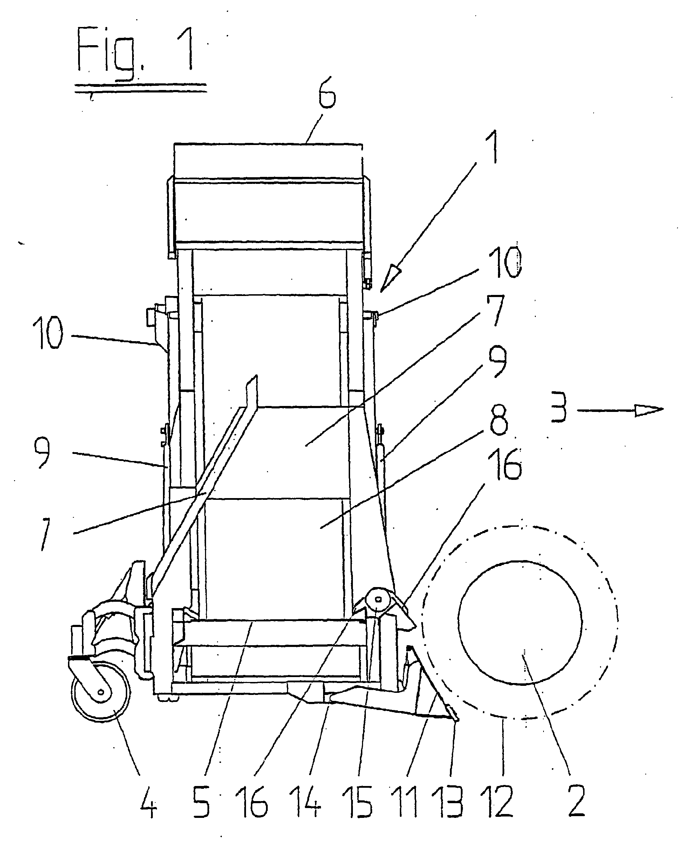

Fig. 1 zeigt einen Querschnitt durch einen erfindungsgemäßen Seitenversetzer 1. Dem Seitenversetzer 1 ist ein in seinem Querschnitt nur schematisch angedeuteter Arbeitsrotor 2 einer Vorrichtung zur Durcharbeitung einer Miete vorgeordnet, wobei diese Vorrichtung selbst, insbesondere der Rahmen, in dem der Arbeitsrotor 2 gelagert ist, der Übersichtlichkeit halber in der Fig. 1 nicht näher gezeigt ist. Die Vorrichtung zur Durcharbeitung einer Miete mit dem angehängten Seitenversetzer 1 hat eine Arbeits-Fahrrichtung in Richtung des Pfeiles 3.

In dieser Fahrtrichtung 3 fährt der Seitenversetzer 1 auf eigenen Laufrollen 4.

Das Kompostmaterial der durchzuarbeitenden Kompostmiete wird vom Arbeitsrotor 2 im wesentlichen entgegengesetzt zur Fahrtrichtung 3 geworfen und soll dabei auf ein Förderband 5 des Seitenversetzer 1 gelangen, welches das übernommene Kompostmaterial quer zur Fahrtrichtung 3 fördert und an einem freien Ende 6 in einer größeren Höhe als der Arbeitsrotor 2 abwirft und auf diese Weise zur ursprünglichen Kompostmiete eine seitlich versetzte neue Kompostmiete als wallartige Anhäufung bildet, die sich parallel zur Fahrtrichtung 3 erstreckt.

Der Bereich oberhalb des Förderbandes ist mit Prallwänden 7 begrenzt, die hochfliegendes Material, welches vom Arbeitsrotor 2 kommt, abfangen und abprallen lassen, so daß dieses Material auf das Förderband 5 herabfällt. Die Prallwände 7 bilden also eine Art Fangkäfig um den Bereich des Förderbandes 5. An das im wesentliche horizontal verlaufende erste Förderband 5, welches das Kompostmaterial vom Arbeitsorgan 2 übernimmt,schließt sich zu seiner Verlängerung in Richtung auf das freie Abgabeende 6 ein zweites Förderband 8 an, daß das vom Förderband 5 übergebene Kompostmaterial schräg aufwärts zu dem genannten Ende 6 fördert. Der Anstellwinkel dieses zweiten Förderbandes 8 ist durch Arbeitszylinder 9 einstellbar. Außerdem sind Korrigiereinrichtungen 10, wiederum im wesentlichen in Form von Arbeitszylindern, im Bereich des freien Endes 6 vorgesehen, die Spurkorrekturen in dem Sinne vornehmen, daß sie den Rahmen, auf dem das zweite Förderband 8 lagert und umläuft im wesentlichen um eine gedachte Achse parallel zum Arbeitsrotor 2 schwenken können, so daß das Förderband 8 auf diesem Rahmen seine Spur hält. Durch den Materialdruck des Kompostmaterials kann es nämlich zu seitlichen Verschiebungen des Förderbandes und zu einem Ausscheren der Spur kommen, dem die Korrektureinrichtungen 10 den Rahmen entsprechend nachsteuern, wenn sie, beispielsweise mit Hilfe einer Sensoreinrichtung, eine solche Spurveränderung feststellen. Eine ähnliche Einrichtung kann auch für das Förderband 5 vorgesehen sein, die ja ebenfalls einer seitlichen Kraftbeaufschlagung durch das vom Arbeitsrotor 2 kommende Material unterliegt.

Zwischen dem Arbeitsrotor 2 und dem Förderorgan 5 befindet sich ein Nachschiebeschild 11, der sich unmittelbar am Arbeitsbereich des Arbeitsrotors 2 und parallel zum Arbeitsrotor 2, und zwar vorzugsweise nahezu über die gesamte Länge des Arbeitsrotors 2 und auch des Förderbandes 5 erstreckt. Dabei ist dieser Nachschiebeschild 11 nach oben etwa tangential zu dem mit einer strichpunktierten Linie angedeuteten Wirkungskreis 12 des Arbeitsorgans 2 orientiert und weist eine derart nach oben gezogene Schildfläche auf, dass der aufgenommene Kompost gut in Richtung des Förderorgans 5 geführt wird.

Der Nachschiebeschild weist, wie angedeutet, eine Verschleißkante 13 auf, und er ist in einem Lagerbereich 14 etwas auf- und abschwenkbar gelagert, so daß auch eventuellen Bodenunebenheiten Rechnung getragen werden kann und der Nachschiebeschild möglichst nah am Erdboden entlangfährt, um das eventuell vom Arbeitsrotor 2 nicht erfaßte Material möglichst restlos doch noch zu erfassen. Das Schild ist unter einem Winkel von 50° bis 80° schräg zur Horizontalen gestellt, wobei der bevorzugte Bereich 60° bis 80° beträgt.

Zwischen dem Nachschiebeschild 11 und dem Förderband 5 befindet sich zudem als weiteres Übergabeorgan eine frei drehbar gelagerte Übergabewalze 15. Beidseitig dieser Übergabewalze 15 sind als Führungsflanken Führungsflächen 16 angeordnet. Durch die Übergabewalze 15 und ihre Führungsflanken 16 wird verhindert, daß sich in diesem Zwischenbereich zwischen dem Nachschiebeschild 11 und dem Förderband 5 Kompostmaterial aufhäuft und dort womöglich anbackt und dadurch den weiteren Materialfluß zum Förderband 5 verhindert. Derartiges Material wird früher oder später Übergewicht bekommen, so daß sich die Walze 15 dreht und das Material entweder in den Arbeitsbereich des Arbeitsrotors 2 zurückkippt oder endgültig auf das Förderband 5 abkippt. Im Normalfall wird sich eventuell auf der Walze 15 aufhäufendes Material aber einfach von nachfolgendem Material aus der Richtung des Arbeitsorganes 2 in Richtung auf das Förderband 5 abgeschoben, was durch die Drehbarkeit der Übergabewalze 15 durch Verringerung der Reibung erleichtert wird.

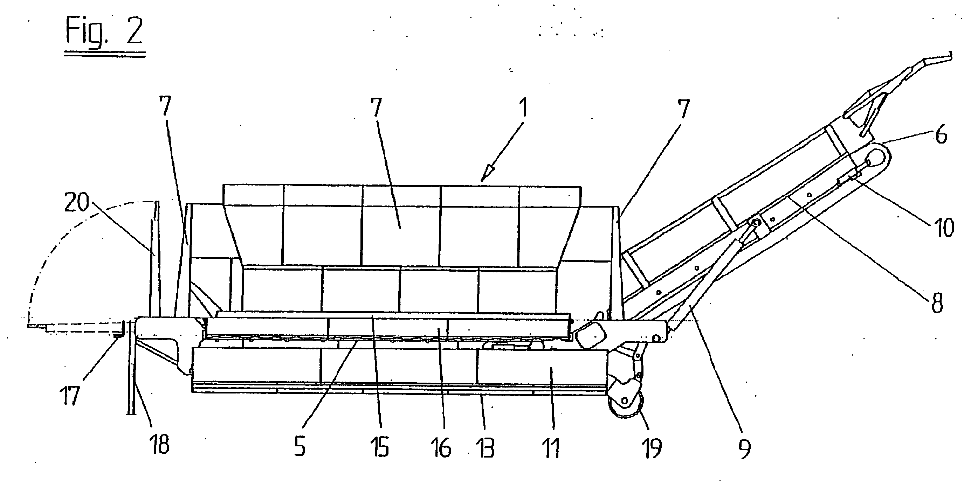

Fig. 2 zeigt eine Vorderansicht des Seitenversetzers 1 gemäß der Fig. 1. Gleiche Bauelemente sind mit den gleichen Bezugzahlen bezeichnet wie in Fig. 1.

In der Fig. 2 ist insbesondere die Verlängerung des Förderbandes 5 durch das Förderband 8 und der Anstellwinkel des Förderbandes 8 zu erkennen, sowie auch der freie Endbereich 6 als Abgabebereich des Kompostes zum Aufbau der neuen Miete unterhalb dieses freien Endes 6 wobei sich die Miete nach und nach entlang der Fahrrichtung 3 wallartig ausdehnt.

Desweiteren sind in der Fig. 2 die Arbeitszylinder 9 und die Korrektureinrichtung 10 genauer zu erkennen.

Außerdem ist erkennbar, daß der Seitenversetzer 1 an seinem einen Ende ein mit Hilfe einer Kurbel 17 ausfahrbares Standbein 18 aufweist und an seinem anderen Ende ein Fahrwerksrad bzw. eine Fahrwerksachse 19. Im Bereich des Standbeines 18 kann zudem eine abklappbare Deichsel 20 angelenkt sein.

## Patentansprüche

1. Seitenversetzer zur seitlichen Versetzung von Kompostmaterial zu einer neuen Anhäufung (Miete), welches von einem Arbeitsrotor (2) einer verfahrbaren Vorrichtung zur Durcharbeitung von Kompostmaterial aus einer ursprünglichen Kompostanhäufung (Kompostmiete) mittels einer Übergabeeinrichtung, die ein Nachschiebeschild (11) aufweist, auf ein in Versetzungsrichtung führendes Förderorgan (5) des Seitenversetzers gelangt, **dadurch gekennzeichnet, dass** der Nachschiebeschild (11) im Wesentlichen den Zwischenraum zwischen dem Arbeitsrotor (2) und dem in Versetzungsrichtung fördernden Förderorgan (5) überbrückt und sich im Wesentlichen parallel zum Förderorgan (5) sowie parallel zum Arbeitsrotor (2) über im Wesentlichen dessen gesamte Arbeitsbreite erstreckt, und dass der Nachschiebeschild (11) am Arbeitsbereich des Arbeitsrotors (2) positioniert ist.

2. Seitenversetzer nach Anspruch 1, **dadurch gekennzeichnet, daß** der Nachschiebeschild (11) nach oben etwa tangential zum Wirkungskreis (12) des Arbeitsrotors (2) orientiert ist.

3. Seitenversetzer nach Anspruch 1 oder Anspruch 2, **dadurch gekennzeichnet, daß** der Nachschiebeschild (11) nahe am Förderorgan (5) angeordnet und bevorzugt am Seitenversetzer federnd verschwenkbar aufgehängt ist.

4. Seitenversetzer zur seitlichen Versetzung von Kompostmaterial, vorzugsweise nach einem der Ansprüche 1 bis 3, **dadurch gekennzeichnet, daß** zwischen dem Nachschiebeschild (11) und dem Förderorgan (5) ein sich vorzugsweise etwa entlang der gesamten Länge des Nachschiebeschildes (11) erstreckender Übergabebereich für das Kompostmaterial vorgesehen ist, der ein eine nur labile Lage für sich eventuell auflagerndes Kompostmaterial bedingendes Übergabeorgan (Walze 15) umfaßt.

5. Seitenversetzer nach Anspruch 4, **dadurch gekennzeichnet, daß** das Übergabeorgan als drehbar gelagerte Walze (15) ausgebildet ist.

6. Seitenversetzer nach einem der Ansprüche 4 bis 5, **dadurch gekennzeichnet, daß** zur Seite des Nachschiebeschildes (11) und/oder zur Seite des Förderorgans (5) neben dem Übergabeorgan eine Führungsfläche (16) als Führungsflanke bereitgestellt ist.

7. Seitenversetzer zur seitlichen Versetzung von Kompostmaterial nach einem der vorhergehenden Ansprüche, **dadurch gekennzeichnet, daß** der Seitenversetzer (1) von der verfahrbaren Vorrichtung zur Durcharbeitung des Kompostmaterials abkoppelbar ist.

8. Seitenversetzer nach Anspruch 7, **dadurch gekennzeichnet, daß** der Seitenversetzer (1) quer zur Verfahrrichtung (3) der Vorrichtung zur Durcharbeitung des Kompostmaterials verfahrbar ist.

9. Seitenversetzer nach Anspruch 7 oder 8, **dadurch gekennzeichnet, daß** der Seitenversetzer (1) eine Art Deichsel und wenigstens ein Fahrwerk (19) aufweist.

10. Seitenversetzer nach Anspruch 9, **dadurch gekennzeichnet, daß** der Seitenversetzer (1) an der Seite der Deichsel wenigstens ein längenveränderbares Standbein (18) und im Bereich seiner anderen Seite wenigstens ein Fahrwerksrad (19) aufweist.

## Claims

1. Lateral shifting machine for lateral shifting of compost material to a new heap (stack), which compost material is moved by an operating rotor (2) of a moveable device for blending compost material from an original compost heap (compost stack) by means of a transfer mechanism which has a pusher plate (11), to a conveying member (5) of the lateral shifting machine, which conveying member guides in the shifting direction, **characterised in that** the pusher plate (11) substantially bridges the intermediate space between the operating rotor (2) and the conveying member (5) which conveys in the shifting direction, and extends substantially parallel to the conveying member (5) and also parallel to the operating rotor (2) substantially over the entire operating range thereof, and **in that** the pusher plate (11) is positioned in the operating region of the operating rotor (2).

2. Lateral shifting machine according to claim 1, **characterised in that** the pusher plate (11) is orientated upwardly approximately tangentially to the effective circle (12) of the operating rotor (2).

3. Lateral shifting machine according to claim 1 or claim 2, **characterised in that** the pusher plate (11) is disposed in proximity to the conveying member (5) and preferably is suspended in a resiliently pivotable manner on the lateral shifting machine.

4. Lateral shifting machine for lateral shifting of compost material, preferably according to one of the claims 1 to 3, **characterised in that**, between the pusher plate (11) and the conveying member (5), there is provided a transfer region for the compost material, which transfer region preferably extends approximately along the entire length of the pusher plate (11) and includes a transfer member (roller 15) which causes a merely unstable position for possibly settling compost material.

5. Lateral shifting machine according to claim 4, **characterised in that** the transfer member is configured as a rotatably mounted roller (15).

6. Lateral shifting machine according to one of the claims 4 to 5, **characterised in that** a guide face (16) is made available as guide edge on the side of the pusher plate (11) and/or on the side of the conveying member (5) adjacent to the transfer member.

7. Lateral shifting machine for lateral shifting of compost material according to one of the preceding claims, **characterised in that** the lateral shifting machine (1) can be uncoupled from the moveable device for blending the compost material.

8. Lateral shifting machine according to claim 7, **characterised in that** the lateral shifting machine (1) is moveable transversely relative to the movement direction (3) of the device for blending the compost material.

9. Lateral shifting machine according to claim 7 or 8, **characterised in that** the lateral shifting machine (1) has a type of drawbar and at least one travelling mechanism (19).

10. Lateral shifting machine according to claim 9, **characterised in that** the lateral shifting machine (1) has at least one standing leg (18) which is on the side of the drawbar and changeable in length, and at least one travelling mechanism wheel (19) in the region of the other side thereof.

## Revendications

1. Dispositif de déplacement latéral pour le déplacement latéral de matières à composter en vue de former un nouveau tas (andain), lesquelles matières, sous l'action d'un rotor de travail (2) d'un dispositif mobile pour mélanger des matières à composter à partir d'un tas de compost initial (andain de compost), parviennent, au moyen d'un dispositif de transfert qui présente un panneau déflecteur (11), sur un organe de transport (5) du dispositif de déplacement latéral allant dans le sens de déplacement, **caractérisé en ce que** le panneau déflecteur (11) occupe essentiellement l'espace entre le rotor de travail (2) et l'organe de transport (5) allant dans le sens de déplacement et s'étend essentiellement parallèlement à l'organe de transport (5) ainsi que parallèlement au rotor de travail (2) sur essentiellement toute sa largeur de travail, et **en ce que** le panneau déflecteur (11) est positionné au niveau de la zone de travail du rotor de travail (2).

2. Dispositif de déplacement latéral selon la revendication 1, **caractérisé en ce que** le panneau déflecteur (11) est orienté vers le haut à peu près tangentiellement au rayon d'action (12) du rotor de travail (2).

3. Dispositif de déplacement latéral selon la revendication 1 ou 2, **caractérisé en ce que** le panneau déflecteur (11) est disposé à proximité de l'organe de transport (5) et, de préférence, est suspendu au dispositif de déplacement latéral de façon à pouvoir pivoter de manière élastique.

4. Dispositif de déplacement latéral pour le déplacement latéral de matières à composter, de préférence selon l'une quelconque des revendications 1 à 3, **caractérisé en ce qu'**une zone de transfert de matières à composter, s'étendant de préférence approximativement sur toute la longueur du panneau déflecteur (11), est prévue entre le panneau déflecteur (11) et l'organe de transport (5), laquelle comprend un organe de transfert (cylindre 15) ne permettant qu'une position instable pour des matières à composter éventuellement présentes.

5. Dispositif de déplacement latéral selon la revendication 4, **caractérisé en ce que** l'organe de transfert est conçu sous la forme d'un cylindre (15) positionné de façon à pouvoir tourner.

6. Dispositif de déplacement latéral selon l'une quelconque des revendications 4 à 5, **caractérisé en ce qu'**à côté de l'organe de transfert, une surface de guidage (16) servant de flanc de guidage est prévue du côté du panneau déflecteur (11) et/ou du côté de l'organe de transport (5).

7. Dispositif de déplacement latéral pour le déplacement latéral de matières à composter selon l'une quelconque des revendications précédentes, **caractérisé en ce que** le dispositif de déplacement latéral (1) peut être désaccouplé du dispositif mobile pour mélanger les matières à composter.

8. Dispositif de déplacement latéral selon la revendication 7, **caractérisé en ce que** le dispositif de déplacement latéral (1) peut être déplacé transversalement au sens de déplacement (3) du dispositif pour mélanger les matières à composter.

9. Dispositif de déplacement latéral selon la revendication 7 ou 8, **caractérisé en ce que** le dispositif de déplacement latéral (1) présente une sorte de barre d'attelage et au moins un mécanisme de déplacement (19).

10. Dispositif de déplacement latéral selon la revendication 9, **caractérisé en ce que** le dispositif de déplacement latéral (1) présente au moins un pied support réglable en longueur (18) du côté de la barre d'attelage et au moins une roue de mécanisme de déplacement (19) de l'autre côté.
